# FASCICULE DE BREVET EUROPEEN

(11) **EP 0 877 870 B1**
(45) Date de publication et mention de la délivrance du brevet: **30.05.2001**
(21) Numéro de dépôt: 97950220.0
(22) Date de dépôt: 04.12.1997
(51) Int. Cl.: F16D 13/58, F16D 13/75

(54) **EMBRAYAGE A FRICTION A FAIBLE EFFORT DE DEBRAYAGE**
REIBUNGSKUPPLUNG MIT NIEDRIGER AUSRÜCKKRAFT
FRICTION CLUTCH WITH LOW DECLUTCH FORCE

(30) Priorité: 05.12.1996 FR 9615307; 17.06.1997 FR 9707481
(43) Date de publication de la demande: 18.11.1998
(73) Titulaire: VALEO, 75017 Paris (FR)
(72) Inventeur: TRAVERS, Jean-Luc, F-80700 Andechy (FR); BRETON, Eric, F-78000 Versailles (FR); PERMUY, Alfred, F-92500 Rueil Malmaison (FR); THIRION DE BRIEL, Jacques, F-92700 Colombes (FR)
(74) Mandataire: Gamonal, Didier
(86) Numéro de dépôt international: FR9702201
(87) Numéro de publication internationale: WO9825042

(56) Documents cités:
- GB-A- 2 120 329
- GB-A- 2 286 640
- GB-A- 2 296 541

## Description

La présente invention concerne les embrayages à friction à faible effort de débrayage, notamment pour véhicules automobiles.

Ainsi qu'on le sait, dans un embrayage classique intercalé entre un arbre menant et un arbre mené, un diaphragme prend appui sur le fond d'un couvercle, fixé à un volant d'entraînement en rotation, pour déplacer un plateau de pression en direction dudit volant, formant plateau de réaction, afin de serrer les garnitures de friction d'une friction d'embrayage entre lesdits plateaux de pression et de réaction.

Le volant d'entraînement est solidaire en rotation d'un premier arbre tel qu'un arbre menant, tandis que la friction d'embrayage présente à sa périphérie interne un moyeu pour son calage en rotation sur un deuxième arbre, tel qu'un arbre mené.

L'embrayage est donc normalement engagé, ou embrayé, avec transmission de couple entre les arbres menant et mené

Pour désengager, ou débrayer, l'embrayage, il faut, à l'aide d'une butée de débrayage, agir axialement en poussant, dans le cas d'un embrayage du type poussé, sur l'extrémité interne des doigts du diaphragme pour faire pivoter ledit diaphragme et annuler l'effort qu'exerce ce diaphragme sur le plateau de pression mobile axialement afin de libérer les garnitures de friction. Le couple n'est alors plus transmis de l'arbre menant à l'arbre mené, car les garnitures de friction ne sont plus serrées entre les plateaux de pression et de réaction solidaires en rotation du couvercle.

Usuellement, le couvercle, le plateau de pression et le diaphragme forment un ensemble unitaire appelé mécanisme d'embrayage que l'on vient rapporter par son couvercle sur le volant, des languettes élastiques liant en rotation, avec mobilité axiale, le plateau de pression au couvercle.

Le diaphragme, ainsi qu'on le sait, est troué centralement et comporte une partie périphérique externe en forme de rondelle Belleville prolongée vers l'intérieur par une partie centrale fragmentée en doigts radiaux par des fentes.

Ce diaphragme, par sa partie rondelle Belleville, prend appui sur le couvercle et sur le plateau de pression. Ainsi, le dispositif débrayeur de l'embrayage, qui permet de contrecarrer à volonté l'action des moyens élastiques embrayeurs, est constitué par les doigts du diaphragme sur l'extrémité interne desquels agit la butée de débrayage, tandis que la rondelle Belleville du diaphragme constitue des moyens élastiques embrayeurs à action axiale pour serrer les garnitures de friction entre les plateaux de pression et de réaction et donc solliciter axialement le plateau de pression en direction opposée au fond du couvercle.

A l'état libre, ce diaphragme a une forme tronconique. Une fois monté dans l'embrayage, sa rondelle Belleville est montée sous précontrainte et est plus ou moins aplatie. Lors de l'opération de débrayage, ou désengagement de l'embrayage, on modifie la conicité de sa rondelle Belleville.

Ainsi qu'on le sait, la courbe caractéristique de ce diaphragme, qui représente la force exercée en fonction de la course de débrayage, par exemple ramenée au niveau de l'extrémité interne des doigts du diaphragme, est déterminée par les dimensions de sa rondelle Belleville, notamment par le rapport entre la hauteur du tronc de cône de la rondelle Belleville à l'état libre et l'épaisseur du diaphragme.

Cette courbe caractéristique passe généralement par un maximum.

Ainsi, la force à exercer sur l'extrémité interne des doigts du diaphragme, pendant l'opération de débrayage, augmente jusqu'à un maximum, diminue graduellement jusqu'à un minimum, puis augmente à nouveau.

La différence entre le maximum et le minimum peut être importante. Pour plus de précisions sur cette courbe caractéristique, on se reportera par exemple au document FR-A-1 392 569.

Dans le document FR-A-1 392 569, on a prévu un dispositif élastique de progressivité extérieur à la friction d'embrayage pour éviter de passer par le maximum précité lors de la course de débrayage. Ce dispositif est monté en série avec la rondelle Belleville du diaphragme et présente une force élastique notablement inférieure à celle de la rondelle Belleville. Ce dispositif a une course limitée entre une position de précontrainte où sa force est maximum et une position de contrainte où sa force est minimum.

Avec cette disposition, on obtient un effort de débrayage globalement croissant au niveau de la butée de débrayage.

On ne peut obtenir lors de la course de débrayage une assistance aussi grande que souhaitée, le dispositif de progressivité diminuant la charge exercée par le diaphragme sur le plateau de pression lors du débrayage.

Les courbes de charge du dispositif de progressivité, usuellement monté au sein de la friction d'embrayage, et du diaphragme ont des formes ne permettant pas de les combiner pour obtenir une forte assistance au débrayage, en particulier si l'on veut respecter des courses et efforts de débrayages compatibles avec les commandes de débrayage actuelles. Par ailleurs, la forme de la courbe du dispositif de progressivité évolue très rapidement avec la vie de l'embrayage, ceci annulant d'autant plus l'assistance au débrayage que le niveau d'assistance demandé est élevé. Pour éviter le vieillissement de la courbe du dispositif d'assistance, il est préférable de placer celui-ci en un endroit où sa courbe de raideur restera stable dans le temps, et, en particulier, en un endroit placé en dehors de la zone de progressivité de la friction où le contact garnitures et le phénomène d'incrustations évoluent et font évoluer la courbe de progressivité.

On peut alors songer à faire intervenir un ressort d'assistance en parallèle avec le diaphragme. Dans ce cas, le ressort d'assistance, par exemple en forme de rondelle Belleville, peut prendre appui sur le couvercle et sur l'extrémité interne des doigts du diaphragme.

En position embrayage engagé, il peut alors exercer une force minimum, puis, sa conicité variant, exercer une force d'assistance lors de l'opération de débrayage; avantageusement, cette force d'assistance est minimum en position embrayage engagé.

Le document GB 2 296 541 décrit un embrayage à friction selon le préambule de la revendication 1, dans lequel une rondelle d'assistance est disposée entre le couvercle et la butée de débrayage, la partie périphérique intérieure de la rondelle étant disposée entre le diaphragme et la butée et agissant directement sur les doigts du diaphragme.

La présente invention a pour objet de créer, de manière simple et économique, un embrayage à friction à faible effort de débrayage faisant appel également à des ressorts agissant en parallèle.

Ainsi, selon l'invention, un embrayage à friction, notamment pour véhicules automobiles, comportant un couvercle avec un fond d'orientation transversale et des moyens de fixation pour fixation sur un volant d'entraînement en rotation, un plateau de pression présentant frontalement une face de friction pour coopération avec une friction d'embrayage, des moyens pour liaison en rotation, avec mobilité axiale, du plateau de pression avec le couvercle, et, interposé entre le plateau de pression et le fond du couvercle, un diaphragme ayant une partie périphérique externe sollicitant axialement le plateau de pression en direction opposée du fond du couvercle et prolongée vers l'intérieur par des doigts pour contrecarrer à volonté, par l'intermédiaire de la pièce d'attaque ou nez d'une butée de débrayage, L'action de ladite partie périphérique, une rondelle élastique d'assistance agissant sur les doigts du diaphragme dans le sens du débrayage en prenant appui sur le couvercle, est caractérisé par le fait que la rondelle d'assistance est disposée axialement entre le couvercle et la pièce d'attaque ou nez de la butée de débrayage en sorte qu'elle est adaptée à agir sur les doigts du diaphragme par l'intermédiaire de ladite pièce d'attaque ou nez.

Avantageusement, les caractéristiques élastiques de la rondelle d'assistance sont choisies en sorte que, lorsque l'embrayage est embrayé, la friction d'embrayage étant neuve, l'action exercée par la rondelle d'assistance est très faible, voire nulle.

De préférence, ladite action est très faible afin d'exercer une précharge déterminée (spécifiée) sur la pièce d'attaque pour que ladite pièce soit en appui permanent sur le diaphragme.

Lorsque l'embrayage est embrayé, la. rondelle d'assistance remplace le ressort de précharge, qui est usuellement associé à la butée de débrayage. La pièce d'attaque est donc en appui permanent sur les doigts du diaphragme.

Cette rondelle d'assistance a dès lors une double fonction et évite ainsi tout mouvement angulaire relatif entre la pièce d'attaque, solidaire de la bague tournante du roulement que comporte la butée de débrayage, et le diaphragme.

On réduit ainsi les usures tout en augmentant la durée de vie de la butée de débrayage du fait que le roulement de celle-ci tourne en permanence.

De préférence, les caractéristiques élastiques de la rondelle d'assistance sont choisies en sorte que, pendant l'opération de débrayage, l'action exercée par la rondelle d'assistance croît puis décroît jusqu'à une valeur déterminée qui peut être très faible voire nulle l'embrayage étant débrayé.

Avantageusement, les doigts du diaphragme étant séparés par des fentes radiales qui débouchent dans des trous placés à la périphérie interne de la partie périphérique du diaphragme, l'embrayage étant du type poussé, la rondelle d'assistance est située globalement radialement à l'intérieur de la zone délimitée par les trous du diaphragme.

De préférence, la rondelle d'assistance prend appui sur le couvercle sur la face du fond de celui-ci située en regard du plateau de pression; la rondelle d'assistance prend appui sur un bord arrondi que présente l'ouverture centrale du fond du couvercle.

Avantageusement, la rondelle d'assistance prend appui sur le couvercle par l'intermédiaire des têtes de rivets qui traversent des trous du diaphragme et qui prolongent le corps desdits rivets à l'extérieur du couvercle; la rondelle d'assistance est solidaire en rotation du couvercle ; la solidarisation en rotation est obtenue par un montage à baïonnette; la solidarisation en rotation est obtenue par des pions portés par le fond du couvercle avec lesquels coopèrent des échancrures ménagées à la périphérie externe de la rondelle d'assistance; le jonc peut être distinct du couvercle ou être issu de celui-ci par emboutissage.

Avantageusement, l'embrayage est du type tiré et la rondelle d'assistance prend appui sur la face externe du fond du couvercle, avantageusement par l'intermédiaire d'un jonc; le fond du couvercle présente extérieurement des pattes pour retenue axiale de la rondelle d'assistance; le jonc peut être distinct du couvercle ou être issu de celui-ci par emboutissage.

De préférence, la rondelle d'assistance est découpée à sa périphérie interne pour constituer des extensions qui coopèrent avec l'élément d'attaque ou nez.

Le déplacement de la butée de débrayage peut être réalisé à l'aide d'une commande électronique.

Avantageusement, l'embrayage est équipé d'un dispositif de rattrapage d'usure d'au moins des garnitures de la friction d'embrayage.

La description qui va suivre illustre l'invention en regard des dessins annexés dans lesquels:
- la figure 1 est une vue en coupe axiale d'un embrayage selon l'invention du type poussé en position embrayage engagé;
- la figure 2 est une vue en coupe axiale d'une variante d'embrayage par rapport à la figure 1;
- la figure 3 est une vue partielle selon la flèche III de la figure 2;
- la figure 4 est une vue en coupe axiale d'un embrayage selon l'invention du type tiré;
- la figure 5 est une vue en coupe axiale montrant une variante de l'embrayage selon la figure 4 équipée d'un dispositif de rattrapage d'usure;
- la figure 6 correspond à une variante de la figure 5;
- la figure 7 est une demi-vue en coupe axiale et correspond à une variante de la figure 1.

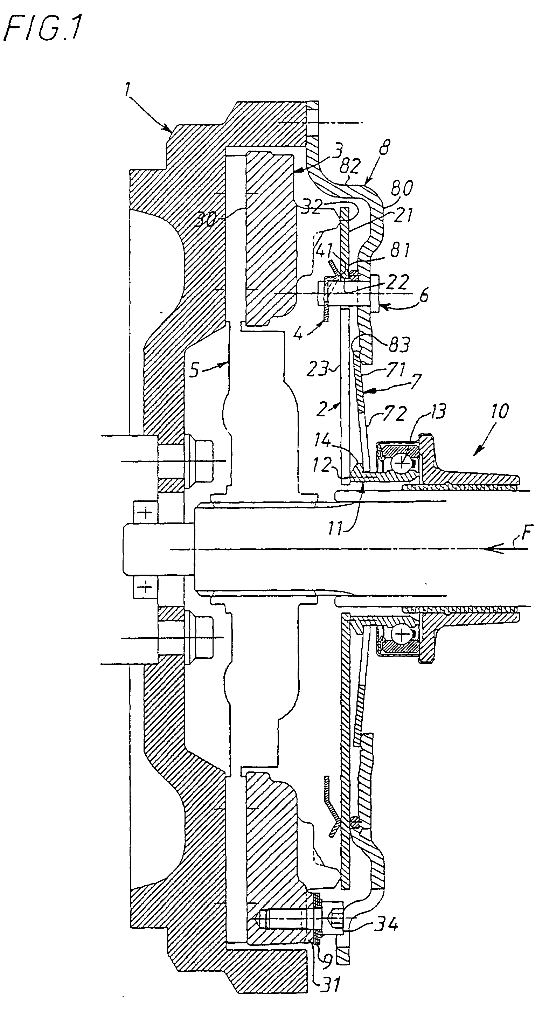

Un embrayage, représenté sur la figure 1, comporte un ensemble de pièces de forme annulaire, à savoir successivement axialement un volant 1 d'entraînement en rotation pour fixation de l'embrayage à un premier arbre, tel qu'un arbre menant, une friction d'embrayage esquissée en 5 présentant à sa périphérie externe des garnitures de friction et à sa périphérie interne un moyeu pour liaison en rotation de l'embrayage avec un second arbre tel qu'un arbre mené, un plateau de pression 3, un couvercle 8 de forme creuse présentant un fond 80 globalement d'orientation transversale troué centralement et, à sa périphérie externe, des moyens de fixation pour fixation du couvercle 8 au volant 1 formant plateau de réaction.

Le volant 1 présente dorsalement une face de friction et centralement des trous pour sa fixation à l'aide de vis à l'arbre menant. Le volant 1 est d'un seul tenant en étant en matière moulable tout comme le plateau de pression 3 qui présente frontalement une face de friction 30 en regard de la face de friction du volant 1.

Le volant 1 et le plateau de pression 3 sont en fonte.

La friction d'embrayage 2 présente également un disque de support pour porter les garnitures de friction, éventuellement fractionnées. Ces garnitures s'étendent de part et d'autre du disque de support en étant fixées à celui-ci par exemple par rivetage, par collage ou brasage au disque de support métallique.

De manière connue, des moyens élastiques de progressivité à action axiale sont interposés entre les deux garnitures pour serrage progressif de celles-ci entre le volant 1 et le plateau de pression 3. Ces moyens peuvent avoir toute forme appropriée. Ces moyens sont par exemple réalisés en conformant le disque de support. Ce disque, à titre non limitatif, peut présenter une partie centrale pour sa liaison, de manière élastique ou non, au moyeu et une partie périphérique fragmentée en pales radiales, par exemple du type tripode. Chaque pale présente alors une zone centrale de portée destinée à la fixation de l'une des garnitures de friction et deux zones périphériques externes de portée destinées à coopérer avec l'autre des garnitures de friction.

Comme mentionné ci-dessus, le disque peut être accouplé de manière élastique au moyeu. En variante, le disque est accouplé de manière rigide au moyeu, le volant 1 pouvant être alors divisé pour présenter deux masses accouplées de manière élastique entre elles par des ressorts à action circonférentielle ou radiale.

En variante, le volant 1 peut être en deux parties et comporter un flasque de support fixé à sa périphérie interne à l'arbre menant et à sa périphérie externe à un plateau de réaction présentant la face de friction. Le couvercle 8 peut être alors assemblé au volant 1 en deux parties à l'aide de pattes d'orientation axiale issues de sa jupe périphérique cylindrique 82. Ces pattes, en forme de tenons, sont alors engagées dans des mortaises formées à la périphérie externe du plateau de réaction ou du flasque de support. Le tronçon libre des pattes, formant les moyens de fixation précités du couvercle 8, peut être fixé par sertissage, rabattement ou soudage, au flasque ou au plateau de réaction, comme décrit par exemple dans la demande de brevet français 95 12523 déposée le 24 octobre 1995.

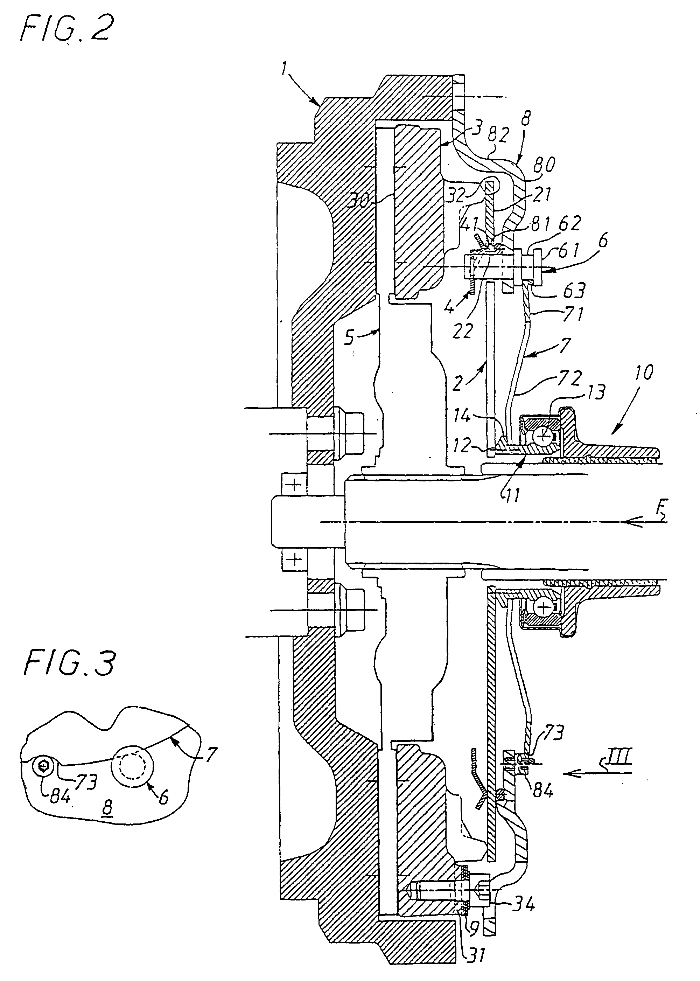

Ici, comme d'ailleurs à la figure 2, le couvercle 8 a une forme classique et présente un rebord radial pour sa fixation au volant 1 lequel présente une jupe annulaire d'orientation axiale entourant le plateau de pression 3; le couvercle 8 est de forme creuse mais, bien entendu, il peut être de forme plate lorsque la jupe du volant est prolongée axialement.

S'agissant d'une application pour véhicule automobile, l'arbre menant est l'arbre moteur du véhicule sur le vilebrequin duquel se fixe le volant 1, tandis que l'arbre mené consiste en l'arbre d'entrée de la boîte de vitesses.

Bien entendu, il est possible d'inverser les structures, le premier arbre pouvant être un arbre mené et le deuxième arbre un arbre menant.

Sur cette figure, le plateau de pression 3 est lié en rotation avec le couvercle 8 par des languettes élastiques 9 permettant au plateau de pression 3 de se déplacer axialement par rapport au couvercle 8. Le plateau de pression 3 est donc solidaire en rotation du couvercle 8 et du volant 1, tout en étant mobile axialement par rapport à ceux-ci.

Les languettes 9 sont ici d'orientation tangentielle et sollicitent le plateau de pression 3 en direction du fond 80 du couvercle. Ces languettes 9 élastiques sont donc à action axiale et ont une action de rappel. En variante, les languettes peuvent être d'orientation radiale.

Les languettes 9 tangentielles sont fixées à l'une de leurs extrémités à des pattes 31 que présente en saillie le plateau de pression 3 et à leur autre extrémité à une plage radiale du couvercle. Ces languettes 9 sont réparties régulièrement circonférentiellement, de manière connue; leur nombre, ainsi que celui des pattes 31, dépend des applications, sachant que, pour les véhicules de tourisme, on fait généralement appel à trois languettes 9 ou groupes de languettes.

La fixation de ces languettes 9 sur les plages du couvercle et sur les pattes 31 est réalisée à l'aide d'organes de fixation 34, ici des vis, en variante des rivets.

Le plateau de pression 3 est déplaçable axialement sous la sollicitation de moyens embrayeurs à action axiale commandés par des moyens débrayeurs, ici un diaphragme 2 monté articulé sur le couvercle 8; le diaphragme 2, de forme tronconique à l'état libre, comme on le sait, comprend une partie périphérique 21 en forme de rondelle Belleville prolongée intérieurement par des doigts 23 séparés par des fentes radiales qui débouchent dans des trous 22 placés à la périphérie interne de la partie périphérique 21 du diaphragme 2.

Ici, l'embrayage est du type poussé, c'est-à-dire qu'il faut, à l'aide d'une butée de débrayage 10, agir en poussant sur l'extrémité interne des doigts 23, pour désengager l'embrayage, dans le sens correspondant à la flèche F. Pour ce faire, le fond 80 du couvercle 8 porte, d'une part, un appui primaire 81 consistant ici en un embouti réalisé dans le fond 80 du couvercle 8 et, d'autre part, un appui secondaire 41 constitué par un bord arrondi réalisé à la périphérie externe d'une rondelle jonc 4 solidarisée au couvercle 8 par des rivets 6, les appuis primaire 81 et secondaire 41 étant radialement au droit l'un de l'autre; les rivets 6 traversent certains des trous 22 du diaphragme 2.

Côté plateau de pression 3, le diaphragme 2 prend appui sur celui-ci, radialement au delà des appuis 81 et 41, selon des zones d'appui 32 en arcs de cercle centrés sur l'axe de l'embrayage que présente le plateau de pression 3 sur sa face tournée vers le fond 80 du couvercle 8.

Une rondelle élastique d'assistance 7, d'un côté, prend appui, sur un élément fixe par rapport au couvercle 8 et, de l'autre côté, agit sur les doigts 23 du diaphragme 2 en sorte qu'elle est adaptée à agir dans le sens du débrayage de l'embrayage.

Plus précisément, et selon l'invention, la rondelle d'assistance 7 est disposée axialement à l'extérieur du diaphragme 2, en étant placée radialement au moins au droit des doigts 23 du diaphragme 2; ici, la rondelle d'assistance 7 est placée globalement radialement à l'intérieur de la zone délimitée par les trous 22 du diaphragme 2; ici, la rondelle d'assistance 7 comprend une partie externe rondelle Belleville 71 prolongée radialement vers l'axe selon des extensions 72 séparées par des fentes radiales; ces extensions 72 s'étendent globalement vers l'extrémité libre des doigts 23 du diaphragme 2. Bien entendu, on peut inverser les structures, les extensions étant alors prolongées radialement en direction opposée à l'axe.

Ici, la périphérie externe de la partie rondelle Belleville 71 de la rondelle d'assistance 7 est en appui sur un bord arrondi 83 qui fait face au plateau de pression 3 et que présente l'ouverture centrale du fond 80 du couvercle 8. Le bord arrondi 83 est formé à la périphérie interne du fond 80.

La rondelle d'assistance 7 agit sur les doigts 23 du diaphragme 2, selon l'invention, par l'intermédiaire de la butée de débrayage 10.

Plus précisément, la butée de débrayage 10 comporte une pièce d'attaque ou nez 11 dont l'extrémité axiale 12 coopère avec les doigts 23 du diaphragme 2 pour le débrayage de l'embrayage; le nez 11, de forme générale cylindrique, présente, comme connu en soi, à sa surface externe le chemin de roulement interne pour des billes 13, la butée 10 étant ici du type à roulement à billes; le nez 11 présente au voisinage de son extrémité 12 un rebord circulaire transversal 14 et c'est avec la face de ce rebord 14, placée à l'opposé de l'extrémité 12, que coopère l'extrémité libre des extensions 72 de la rondelle d'assistance 7 pour action sur les doigts 23 du diaphragme 2.

La rondelle d'assistance 7 a des caractéristiques élastiques telles que, lorsque l'embrayage est embrayé et que les garnitures du disque de friction sont neuves, elle ne génère aucun effort axial sur les doigts 23 du diaphragme 2; l'effort de serrage des garnitures pincées entre le plateau de réaction 1 et le plateau de pression 3 est celui qui est donné par la partie périphérique 21 du diaphragme 2; lorsque l'on agit sur les doigts 23 du diaphragme 2 dans le sens de la flèche F, pour le débrayage de l'embrayage, la rondelle d'assistance 7 agit sur les doigts 23 du diaphragme 2, également dans le sens de la flèche F, par l'intermédiaire de la butée de débrayage 10, en prenant appui sur le couvercle 8 par l'intermédiaire du bord arrondi 83, soulageant ainsi l'effort nécessaire au débrayage; on s'arrange également pour qu'en fin d'opération de débrayage, correspondant par exemple à la fin de la course limitée de la butée de débrayage, la rondelle d'assistance 7 ne transmette aucun effort au diaphragme 2.

Comme on le voit, grâce à l'invention, ici une rondelle d'assistance 7 a été associée à un diaphragme sans qu'il soit nécessaire de modifier pratiquement le couvercle 8; par ailleurs, celle-ci a été placée dans un espace libre et sa présence n'a pas affecté pratiquement l'encombrement axial du mécanisme d'embrayage.

Avantageusement, les caractéristiques élastiques de la rondelle d'assistance 7 sont telles que, lorsque l'embrayage est embrayé, elle génère un effort axial dit de précharge qui sollicite l'extrémité 12 au contact des extrémités internes des doigts 23 du diaphragme 2 pour maintenir, de manière connue, le nez 11 en appui permanent contre les doigts 23 et éviter tout mouvement angulaire relatif, ce qui réduit les usures.

En variante, l'effort axial généré par la rondelle d'assistance 7 est nul lorsque l'embrayage est embrayé et un ressort de précharge classique est prévu, associé à la butée de débrayage.

Selon la variante de la figure 2, l'appui sur le couvercle 8 de la rondelle d'assistance 7 est porté par une tête 61 des rivets 6; plus précisément, le corps du rivet 6 est prolongé à l'extérieur du couvercle selon une tête 61 creusée d'une gorge circulaire 62 qui reçoit la périphérie externe de la partie périphérique 71 de la rondelle d'assistance 7 ; lorsque la rondelle d'assistance 7 transmet un effort au nez 11 de la butée de débrayage 10, dans le sens de la flèche F, elle prend appui sur la paroi, qui borde transversalement la gorge 62, qui est la plus éloignée du fond 80 du couvercle 8; avantageusement, un jonc 63 est disposé entre cette paroi et la rondelle d'assistance 7.

Lorsque l'on choisit une rondelle d'assistance 7 qui transmet un effort axial faible, tel que l'effort de précharge ci-dessus, ou nul, dans certaines positions du diaphragme 2, comme par exemple embrayage serré, garnitures neuves, comme expliqué ci-dessus, il est préférable d'éviter, dans ces positions, tout mouvement relatif entre pièces. qui conduirait à des usures; ici, la rondelle d'assistance 7 est solidaire en rotation du couvercle 8 grâce à des pions 84, par exemple au nombre de trois également répartis circonférentiellement, avec lesquels coopèrent des échancrures 73 ménagées à la périphérie externe de la rondelle d'assistance 7. Ces échancrures 73 favorisent un montage, du type baïonnette, de la rondelle d'assistance 7.

Ainsi, on introduit les échancrures 73 au niveau des têtes 61 des rivets 6, puis on effectue une rotation et on monte les pions 84. Avantageusement, les pions 84 sont des vis autotaraudeuses.

On notera que les extensions 72, en forme de doigts, favorisent le montage de la rondelle d'assistance 7 sur le nez 11 par déformation des extensions 72 pour que celles-ci viennent en prise avec le rebord 14.

On notera que, dans cette figure, la rondelle d'assistance 7 est placée à l'extérieur du couvercle 8, du côté de celui-ci opposé au plateau de pression 3, alors qu'à la figure 1 la rondelle d'assistance 7 est à sa périphérie externe implantée entre le couvercle 8 et le diaphragme 7.

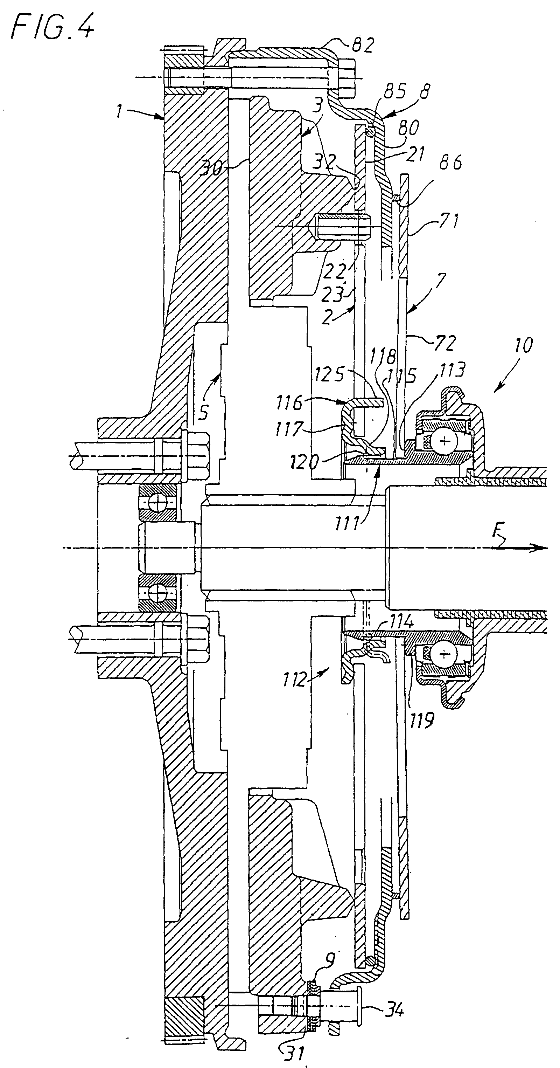

La figure 4 montre l'application de l'invention à un embrayage du type tiré; sur cette figure, les pièces identiques à celles des variantes précédentes, ou jouant le même rôle, portent les mêmes références. L'embrayage étant du type tiré, le diaphragme 2 est en appui sur le couvercle 8 par sa périphérie externe, ici par l'intermédiaire d'un jonc 85, et ses deux appuis 85 et 32 sont radialement inversés, le jonc étant implanté radialement au dessus de l'appui 32 : le débrayage de l'embrayage est obtenu en agissant sur les extrémités des doigts 23 du diaphragme 2 dans le sens de la flèche F de la figure 4. Ici, la jupe 82 du couvercle 8 est fractionnée pour former des entretoises entre le volant 1 et le rebord radial de fixation du couvercle 8 servant d'appui aux têtes des vis de fixation. Les entretoises entourent le plateau de pression 3.

Pour ce faire, la butée de débrayage 10 est adaptée à ce type d'embrayage tiré; pour l'action en traction de la butée de débrayage 10 sur le diaphragme 2, il est mis en oeuvre un ensemble d'accostage 112.

La butée de débrayage 10 comporte une pièce d'attaque ou nez 111 présentant une gorge annulaire cylindrique 115 délimitée transversalement, à sa périphérie externe, par un épaulement 1 14.

L'ensemble d'accostage 112 comporte, d'une part, une pièce d'accostage 116, ici en tôle emboutie, présentant une collerette 117 propre à son appui sur le diaphragme 2, du côté de celui-ci opposé à la butée de débrayage 10, avec, ici, un profil transversal cintré, et, d'un seul tenant avec cette collerette 117, une douille 118 destinée à traverser axialement ledit diaphragme 2 à la faveur de son ouverture centrale, entre ce diaphragme 2 et la pièce d'attaque 111 de la butée de débrayage 10, et, d'autre part, s'étendant annulairement à l'intérieur de ladite douille 118 de cette pièce d'accostage 116, entre celle-ci et ladite pièce d'attaque 111, un jonc de couplage 120, qui, élastiquement déformable radialement, est propre à un attelage de la butée de débrayage 10 par simple encliquetage de celle-ci, au moins pour le sens axial qui, allant de la collerette 117 au jonc de couplage 120, et tel que repéré par la flèche F sur la figure 1, correspond, comme recherché, à l'exercice d'une traction de cette butée de débrayage 10 sur le diaphragme 2.

Le jonc de couplage 120 s'étend dans un plan, sensiblement perpendiculairement à l'axe de l'ensemble; il est en fil rond et ouvert par deux brins qui, traversant chacun la douille 118 de la pièce d'accostage 116 à la faveur de deux évidements de celle-ci, à raison d'un évidement par brin, constituent, au-delà de cette douille 118 globalement d'orientation axiale, des moyens de préhension; pour son maintien par rapport à celle-ci, en coopération avec les brins, il présente, dans son plan, au moins un tenon s'étendant radialement en prise avec un passage que présente la douille 118.

Pour le maintien de l'ensemble vis-à-vis du diaphragme 2, la collerette 117 de la pièce d'accostage 116 présente, de place en place à sa périphérie externe, des pattes 125, dirigées axialement dans le même sens que la douille 118, traversant le diaphragme 2, à la faveur, chacune respectivement, d'une des fentes ménagées entre les doigts 23 de celui-ci.

A l'extérieur de la douille 118 de la pièce d'accostage 116, les deux brins du jonc de couplage 120 sont élastiquement crochetés l'un sur l'autre, en sorte que ce jonc de couplage 120 est refermé circonférentiellement sur lui-même sous contrainte. Autrement dit, pour la configuration libre de repos du jonc de couplage 120, ses brins s'écartent élastiquement l'un de l'autre, cependant que son diamètre s'accroît.

Présentée axialement, la butée de débrayage 10 vient s'encliqueter, par l'épaulement transversal 114 de sa pièce d'attaque 111, sur ce jonc de couplage 120, moyennant une déformation radiale élastique de celui-ci.

Comme évoqué ci-dessus, avantageusement, lorsque l'embrayage est embrayé, la rondelle d'assistance 7 maintient la collerette 117 en contact avec la face interne des doigts 23 du diaphragme 2 en exerçant une précharge axiale via le jonc 120.

Lorsque cette butée de débrayage est ensuite déplacée suivant la flèche F de la figure 4, le jonc de couplage 120, coincé entre son épaulement transversal 114 et la douille 118 de la pièce d'accostage 116, assure son attelage à celle-ci, et son effort de traction est dès lors transmis au diaphragme 2 par cette pièce d'accostage 116; plus précisément, de manière connue, le jonc 20 est coincé entre son épaulement 114 et une partie tronconique que présente la douille 118.

Face à l'épaulement 114, la gorge 115 de la pièce d'attaque ou nez 111 est bordée par une face transversale 113 que présente une collerette 119 ménagée à la périphérie externe de la pièce d'attaque ou nez 111. C'est avec cette face transversale 113 que coopère la périphérie interne de la rondelle d'assistance 7 pour agir, dans le sens de la flèche F, sur la pièce d'attaque ou nez 111 de la butée de débrayage 10, en prenant appui ici sur la face externe du fond 80 du couvercle 8, avantageusement par l'intermédiaire d'un jonc 86, ou d'un embouti en forme de jonc issu par emboutissage du fond 80 du couvercle 8.

Comme cela est visible sur la figure 4, avantageusement la face transversale 113 avec laquelle coopère la rondelle d'assistance 7 est bombée, sa convexité étant dirigée vers le plateau de pression 3.

La précharge exercée par la rondelle d'assistance 7 permet en outre ici de coincer en permanence le jonc 120 entre la douille 118 et l'épaulement 114.

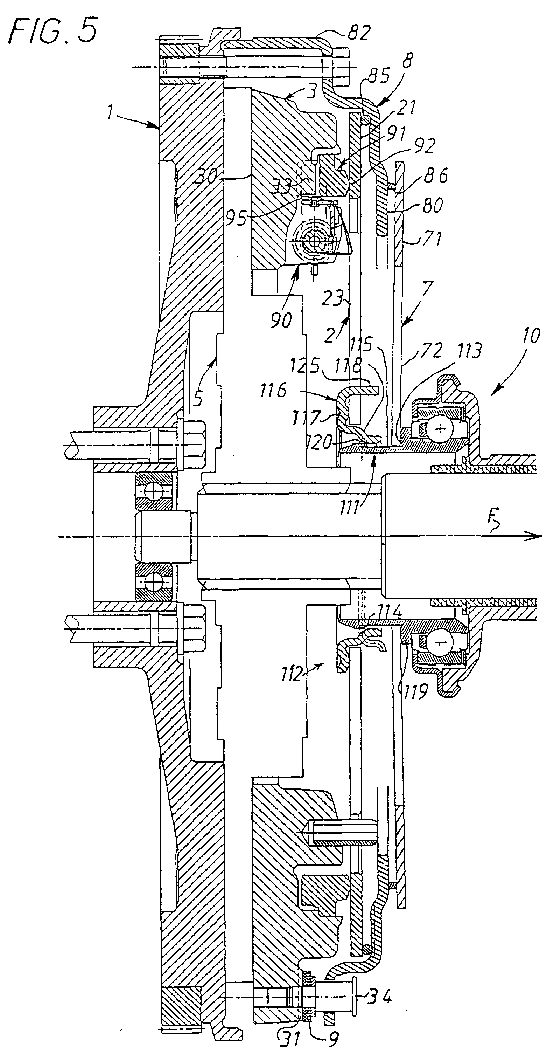

La figure 5 représente un embrayage du même type que celui de la figure 4 équipé d'un dispositif de rattrapage d'usure 90.

Il est en effet intéressant de faire appel à un dispositif de réglage, dit dispositif de rattrapage d'usure, qui maintient le diaphragme toujours globalement dans la même position, quelle que soit l'usure des garnitures de friction de l'embrayage et/ou des faces de friction des plateaux de pression et de réaction, pour que le ressort d'assistance exerce, en toute circonstance lors de la durée de vie de l'embrayage, une très faible force lorsque l'embrayage est en position engagée ou embrayée, comme expliqué ci-dessus.

Le dispositif de rattrapage d'usure 90 a été décrit en détails dans la demande de brevet français déposée le même jour que celui de la présente demande à laquelle il conviendra de se reporter pour plus d'informations, la description correspondante devant être considérée comme faisant partie de la présente demande; on rappellera simplement que le dispositif de rattrapage d'usure 90 comprend des moyens à rampes 91 ayant des rampes 95 inclinées; ils sont constitués d'un anneau 91 présentant des rampes disposées circonférentiellement ; ledit anneau 91 présente également des zones d'appui 92 constituées par une arête supérieure arrondie centrée sur l'axe de l'embrayage placée axialement à l'extérieur par rapport aux rampes 95. Le plateau de pression 3 présente, ici venus de moulage, sur sa face tournée vers le fond du couvercle 8, des plots 33 répartis circonférentiellement à une distance l'un de l'autre qui correspond à celle qui sépare circonférentiellement deux rampes 95 successives, les plots 33 étant destinés à coopérer chacun avec une rampe 95.

Les moyens à rampes 91 sont placés axialement entre le diaphragme 2 et le plateau de pression 3 en sorte que les plots 33 reçoivent les rampes 95 et le diaphragme 2 coopère avec les zones d'appui 92 qui constituent ainsi les moyens d'appui par l'intermédiaire desquels le diaphragme 2 agit sur le plateau de pression 3.

Grâce à la présence du dispositif de rattrapage d'usure 90, les positions du diaphragme 2 et de la rondelle d'assistance 7, à l'embrayage et au débrayage, sont fixes, indépendantes de l'usure des garnitures : l'assistance au débrayage fournie par la rondelle d'assistance est donc indépendante de cette usure, ainsi que l'effort de serrage.

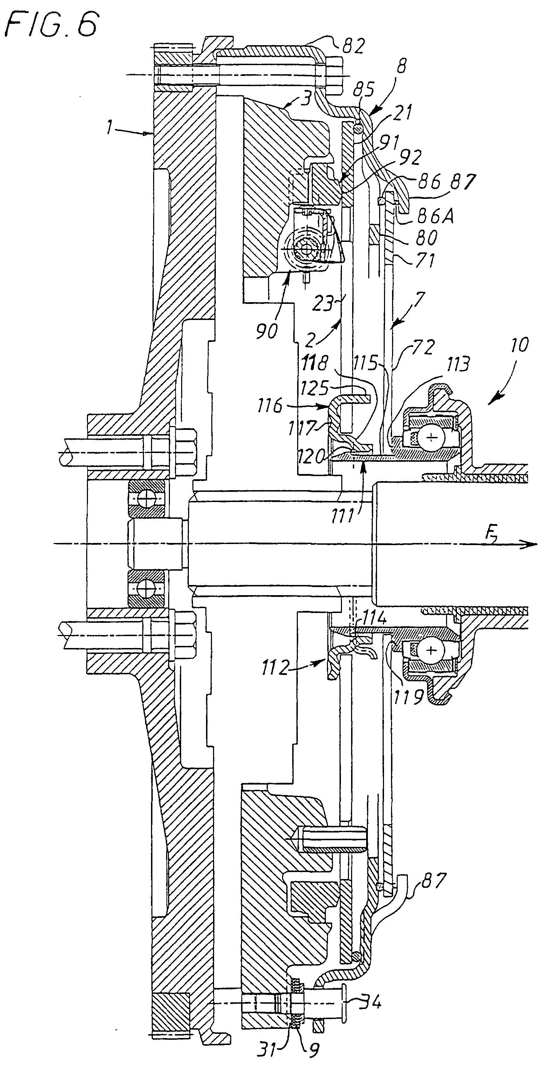

La figure 6 montre une variante de l'embrayage de la figure 5 ; la partie périphérique externe de la rondelle d'assistance 7 prend également appui sur la face externe du fond 80 du couvercle 8 par l'intermédiaire d'un jonc 86 mais ici le fond 80 du couvercle 8 présente extérieurement des pattes 87 de retenue découpées et cambrées s'étendant vers l'axe de l'embrayage, à distance axiale du fond 80 du couvercle 8 pour retenue axiale de la rondelle d'assistance 7 à sa périphérie externe; avantageusement, un jonc 86A est placé axialement entre la rondelle d'assistance 7 et les pattes 87 également réparties circonférentiellement.

De préférence, comme cela est représenté, le fond 80 du couvercle 8 présente une rainure circonférentielle pour centrage du jonc 86.

Grâce à ces dispositions, le mécanisme d'embrayage constitue un sous-ensemble incorporant la rondelle d'assistance 7.

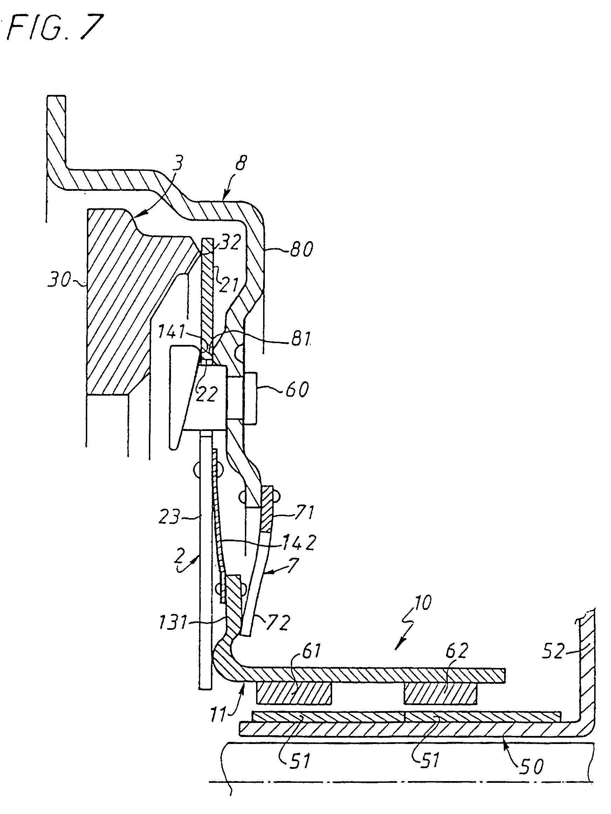

La figure 7 représente un embrayage du même type que celui de la figure 1.

Ainsi, le diaphragme 2 est monté basculant entre l'appui primaire 81 en forme d'embouti et un appui secondaire 141 formé par des bourrelets appartenant chacun à la tête d'une colonnette 60 traversant le diaphragme 2 de la même manière que les rivets 6.

Pour désengager l'embrayage, on agit en poussant sur l'extrémité interne des doigts 23 du diaphragme 2 à l'aide de la butée de débrayage 10, dite aussi actionneur de débrayage, dépourvue ici de roulement à billes. Le déplacement de la butée 10 portée ici par le diaphragme 2 n'est pas commandé par une fourchette de débrayage.

Plus précisément, !a butée de débrayage 10 comporte une pièce d'attaque 11 , appelée également élément d'attaque, constituée par une douille d'attaque, qui porte directement sur les doigts 23 du diaphragme 2 à la faveur d'un rebord radial d'appui 131 conformé pour porter localement sur les doigts 23. Ce rebord 131 est relié par des languettes élastiques 142 aux doigts 23. Ces languettes 142 sont fixées, ici par rivetage, d'une part, aux doigts 23 radialement au voisinage des colonnettes 60 et, d'autre part, à la périphérie externe du rebord 131.

La rondelle d'assistance 7 agit entre le rebord d'appui 131 et le couvercle 8.

Les languettes élastiques 142 génèrent ici un effort axial de précharge, qui sollicite le rebord d'appui 131 au contact des extrémités internes des doigts 23 pour maintenir la pièce d'attaque 11 en appui permanent contre les doigts 23. L'effort généré par la rondelle d'assistance 7 est nul lorsque l'embrayage est engagé. Cette rondelle d'assistance 7 a une forme analogue à celle de la figure 1 et comporte donc, d'une part, une partie externe en forme de rondelle Belleville fixée, ici par rivetage, sur le fond 80 du couvercle 8 au voisinage de l'ouverture centrale du fond 80, et, d'autre part, des extensions en forme de doigts s'étendant vers le rebord 131 pour prendre appui sur celui-ci en sorte que la rondelle d'assistance 7 agit sur les doigts 23 du diaphragme 2 par l'intermédiaire de la butée de débrayage 10. La rondelle d'assistance 7 assiste la butée 10 lors du processus de débrayage et est en contact ici avec la face externe du fond 80 à l'opposé du plateau de pression 3.

Ici, trois languettes 142 élastiquement déformables axialement réparties à 120° les unes par rapport aux autres sont prévues. Ces languettes assurent conjointement le centrage de la douille d'attaque 11, la liaison en rotation de cette douille 11 avec le diaphragme 2 et le maintien axial de la douille 11 sur le diaphragme 2. La butée de débrayage 10 est ici du type concentrique et comporte deux parties coaxiales agencées concentriquement à savoir une partie fixe, comportant un tube fixe 50 portant extérieurement au moins une bobine électrique, entourée par une partie mobile axialement comportant la douille d'attaque 11 portant intérieurement au moins un aimant permanent en forme d'anneau continu ou fragmenté en secteurs circulaires.

Ici, la douille 11 porte intérieurement deux aimants permanents 61, 62 à polarité inversée entourant chacun à jeu radial, définissant un entrefer, une bobine électrique 51 portée extérieurement par le tube fixe 50 qui comporte un rebord radial 52 pour sa fixation sur le carter de la boîte de vitesses, non visible ainsi que les vis de fixation du rebord 52 audit carter.

Le tube fixe 50, destiné à être traversé par l'arbre d'entrée de la boîte de vitesses, et la douille d'attaque 131 sont en matériau ferromagnétique, tel que de l'acier, en variante en matériau magnétique.

Les bobines 51 sont montées en série et ont des bobinages inversés.

Le déplacement de la butée de débrayage 10 est réalisé en alimentant électriquement les bobines 51 par l'intermédiaire d'un dispositif de commande appartenant à un module électronique relié aux extrémités des bobines électriques 51.

Le module électronique comporte également un calculateur qui reçoit des informations provenant de capteurs.

Ces capteurs envoient des informations concernant les vitesses de rotation des arbres menant et mené, ainsi que le rapport engagé.

Le calculateur pilote ainsi le dispositif de commande selon des programmes déterminés en fonction du rapport engagé et des vitesses de rotation des arbres menant et mené.

Ainsi en inversant le sens du courant électrique dans les bobines on déplace axialement, dans un sens ou dans l'autre, la douille d'attaque 11 et on commande en effort le déplacement de ladite douille 11 portée par le diaphragme.

On a décrit, à propos des figures 5 et 6, un embrayage du type tiré comportant un dispositif de rattrapage d'usure.

Bien entendu, les embrayages selon les figures 1, 2 et 7, du type poussé, peuvent également, avantageusement, être équipés d'un dispositif de rattrapage d'usure.

En variante, le module électronique précité peut piloter un moteur électrique commandant dans les deux sens le déplacement de la butée de débrayage des figures 1 à 6.

Grâce à la rondelle d'assistance, le moteur est de faible puissance.

## Revendications

1. Embrayage à friction, comportant un couvercle (8) avec un fond (80) d'orientation transversale et des moyens de fixation pour fixation sur un volant d'entraînement en rotation, un plateau de pression (3) présentant frontalement une face de friction (30) pour coopération avec une friction d'embrayage, des moyens (9) pour liaison en rotation, avec mobilité axiale, du plateau de pression (3) avec le couvercle (8), et, interposé entre le plateau de pression (3) et le fond (80) du couvercle (8), un diaphragme (2) ayant une partie périphérique externe (21) sollicitant axialement le plateau de pression (8) en direction opposée du fond (80) du couvercle (8) et prolongée vers l'intérieur par des doigts (23) pour contrecarrer à volonté, par l'intermédiaire de la pièce d'attaque ou nez (11, 111) d'une butée de débrayage (10), l'action de ladite partie périphérique (21), une rondelle élastique d'assistance (7) agissant sur les doigts (23) du diaphragme (2) dans le sens du débrayage en prenant appui sur le couvercle (8), caractérisé par le fait que la rondelle d'assistance (7) est disposée entre le couvercle (8) et la pièce d'attaque ou nez (11, 111) de la butée de débrayage (10) en sorte qu'elle est adaptée à agir sur les doigts (23) du diaphragme (2) par l'intermédiaire de ladite pièce d'attaque ou nez (11, 111).

2. Embrayage selon la revendication 1, caractérisé par le fait que les caractéristiques élastiques de la rondelle d'assistance (7) sont choisies en sorte que, lorsque l'embrayage est embrayé, la friction d'embrayage étant neuve, l'action exercée par la rondelle d'assistance (7) est très faible, voire nulle.

3. Embrayage selon la revendication 2, caractérisé par le fait que les caractéristiques élastiques de la rondelle d'assistance (7) sont choisies en sorte que, lorsque l'embrayage est embrayé, la rondelle d'assistance (7) exerce une précharge sur la pièce d'attaque (11, 111) pour maintenir celle-ci au contact des doigts (23) du diaphragme (2).

4. Embrayage selon la revendication 3, caractérisé par le fait que les caractéristiques élastiques de la rondelle d'assistance (7) sont choisies en sorte que, pendant l'opération de débrayage, l'action exercée par la rondelle d'assistance (7) croît puis décroît jusqu'à une valeur déterminée qui peut être très faible voire nulle l'embrayage étant débrayé.

5. Embrayage selon la revendication 2 ou 3, dans lequel les doigts (23) du diaphragme (2) sont séparés par des fentes radiales qui débouchent dans des trous (22) placés à la périphérie interne de la partie périphérique (21) du diaphragme 2, l'embrayage étant du type poussé, caractérisé par le fait que la rondelle d'assistance (7) est située globalement radialement à l'intérieur de la zone délimitée par les trous (22) du diaphragme (2).

6. Embrayage selon la revendication 5, caractérisé par le fait que la rondelle d'assistance (7) prend appui sur le couvercle (8) sur la face du fond (80) de celui-ci située en regard du plateau de pression (3).

7. Embrayage selon la revendication 6, caractérisé par le fait que la rondelle d'assistance (7) prend appui sur un bord arrondi (83) que présente l'ouverture centrale du fond (80) du couvercle (8).

8. Embrayage selon la revendication 5, caractérisé par le fait que la rondelle d'assistance 17 prend appui sur le couvercle (8) par l'intermédiaire des têtes (61) de rivets qui traversent des trous (22) du diaphragme (2) et qui prolongent le corps desdits rivets à l'extérieur du couvercle (8).

9. Embrayage selon la revendication 8, caractérisé par le fait que la rondelle d'assistance (7) est solidaire en rotation du couvercle (8).

10. Embrayage selon la revendication 9, caractérisé par le fait que la rondelle d'assistance (7) est solidaire en rotation du couvercle (8) par un montage du type baïonnette.

11. Embrayage selon la revendication 9, caractérisé par le fait que la solidarisation en rotation est obtenue par des pions (84) portés par le fond (80) du couvercle (8) avec lesquels coopèrent des échancrures (73) ménagées à la périphérie externe de la rondelle d'assistance (7).

12. Embrayage selon la revendication 2, dans lequel l'embrayage est du type tiré, caractérisé par le fait que la rondelle d'assistance (7) prend appui sur la face externe du fond (80) du couvercle (8), avantageusement par l'intermédiaire d'un jonc (86).

13. Embrayage selon la revendication 12, caractérisé par le fait que le fond (80) du couvercle (8) présente extérieurement des pattes (87) pour retenue axiale de la rondelle d'assistance (7).

14. Embrayage selon la revendication 2, caractérisé par le fait que la rondelle d'assistance (7) est découpée à sa périphérie interne pour constituer des extensions (72) qui coopèrent avec l'élément d'attaque ou nez (11, 111).

15. Embrayage selon la revendication 2, caractérisé par le fait qu'il est équipé d'un dispositif de rattrapage d'usure (9()) d'au moins des garnitures de la friction d'embrayage (5).

## Patentansprüche

1. Reibungskupplung, umfassend einen Deckel (8) mit einem quer ausgerichteten Boden (80) und Befestigungsmitteln zur Befestigung an einem Drehantriebsschwungrad, eine Druckplatte (3), die stirnseitig eine Reibfläche (30) für das Zusammenwirken mit einer Reibungskupplungsscheibe aufweist, Mittel (9) für die axial bewegliche Drehverbindung der Druckplatte (3) mit dem Deckel (8) und eine zwischen der Druckplatte (3) und dem Boden (80) des Deckels (8) eingefügte Membranfeder (2) mit einem äußeren Umfangsteil (21), der die Druckplatte (3) axial in der zum Boden (80) des Deckels (8) entgegengesetzten Richtung beaufschlagt und nach innen durch Finger (23) verlängert wird, um über das Angriffsteil oder die Nase (11, 111) eines Ausrücklagers (10) der Wirkung des besagten Umfangsteils (21) beliebig entgegenzuwirken, wobei eine Unterstützungsfederscheibe (7) auf die Finger (23) der Membranfeder (2) in der Ausrückrichtung einwirkt, indem sie auf dem Deckel (8) zur Auflage kommt, **dadurch gekennzeichnet**, daß die Unterstützungsfederscheibe (7) zwischen dem Deckel (8) und dem Angriffsteil oder der Nase (11, 111) des Ausrücklagers (10) angeordnet ist, so daß sie auf die Finger (23) der Membranfeder (2) über das besagte Angriffsteil oder die Nase (11, 111) einwirken kann.

2. Kupplung nach Anspruch 1, **dadurch gekennzeichnet**, daß die Elastizitätseigenschaften der Unterstützungsfederscheibe (7) so gewählt sind, daß bei eingerückter Kupplung und bei neuer Reibungskupplungsscheibe die durch die Unterstützungsfederscheibe (7) ausgeübte Kraft sehr gering bzw. gleich null ausfällt.

3. Kupplung nach Anspruch 2, **dadurch gekennzeichnet**, daß die Elastizitätseigenschaften der Unterstützungsfederscheibe (7) so gewählt sind, daß bei eingerückter Kupplung die Unterstützungsfederscheibe (7) eine Vorbelastung auf das Angriffsteil (11, 111) ausübt, um dieses in Kontakt mit den Fingern (23) der Membranfeder (2) zu halten.

4. Kupplung nach Anspruch 3, **dadurch gekennzeichnet**, daß die Elastizitätseigenschaften der Unterstützungsfederscheibe (7) so gewählt sind, daß während des Ausrückvorgangs die durch die Unterstützungsfederscheibe (7) ausgeübte Kraft zunimmt und dann bis zu einem bestimmten Wert abnimmt, der sehr gering oder gleich null bei ausgerückter Kupplung sein kann.

5. Kupplung nach Anspruch 2 oder 3, bei der die Finger (23) der Membranfeder (2) durch radiale Schlitze getrennt sind, die in Löchern (22) am inneren Umfang des Umfangsteils (21) der Membranfeder (2) münden, wobei die Kupplung in gedrückter Konstruktion ausgeführt ist, **dadurch gekennzeichnet**, daß sich die Unterstützungsfederscheibe (7) insgesamt radial innerhalb des durch die Löcher (22) der Membranfeder (2) begrenzten Bereichs befindet.

6. Kupplung nach Anspruch 5, **dadurch gekennzeichnet**, daß die Unterstützungsfederscheibe (7) am Deckel (8) auf der gegenüber der Druckplatte (3) befindlichen Fläche des Deckelbodens (80) zur Anlage kommt.

7. Kupplung nach Anspruch 6, **dadurch gekennzeichnet**, daß die Unterstützungsfederscheibe (7) an einem abgerundeten Rand (83) zur Anlage kommt, den die mittige Öffnung des Bodens (80) des Deckels (8) aufweist.

8. Kupplung nach Anspruch 5, **dadurch gekennzeichnet**, daß die Unterstützungsfederscheibe (7) am Deckel (8) über Köpfe (61) von Nieten zur Anlage kommt, die durch Löcher (22) der Membranfeder (2) hindurchgehen und die den Körper der besagten Niete außerhalb des Deckels (8) verlängern.

9. Kupplung nach Anspruch 8, **dadurch gekennzeichnet**, daß die Unterstützungsfederscheibe (7) drehfest mit dem Deckel (8) verbunden ist.

10. Kupplung nach Anspruch 9, **dadurch gekennzeichnet**, daß die Unterstützungsfederscheibe (7) durch eine Bajonettmontage drehfest mit dem Deckel (8) verbunden ist.

11. Kupplung nach Anspruch 9, **dadurch gekennzeichnet**, daß die drehfeste Verbindung durch am Boden (80) des Deckels (8) angebrachte Stifte (84) herbeigeführt wird, mit denen am äußeren Umfang der Unterstützungsfederscheibe (7) eingearbeitete Aussparungen (73) zusammenwirken.

12. Kupplung nach Anspruch 2, bei der die Kupplung in gezogener Konstruktion ausgeführt ist, **dadurch gekennzeichnet**, daß die Unterstützungsfederscheibe (7) an der äußeren Fläche des Bodens (80) des Deckels (8), vorteilhafterweise über einen Ring (86), zur Anlage kommt.

13. Kupplung nach Anspruch 12, **dadurch gekennzeichnet**, daß der Boden (80) des Deckels (8) außen Ansätze (87) für das axiale Halten der Unterstützungsfederscheibe (7) aufweist.

14. , Kupplung nach Anspruch 2, **dadurch gekennzeichnet**, daß die Unterstützungsfederscheibe (7) an ihrem inneren Umfang ausgeschnitten ist, um Erweiterungen (72) zu bilden, die mit dem Angriffselement oder der Nase (11, 111) zusammenwirken.

15. Kupplung nach Anspruch 2, **dadurch gekennzeichnet**, daß sie mit einer Verschleißnachstellvorrichtung (90) wenigstens für die Reibbeläge der Reibungskupplungsscheibe (5) ausgerüstet ist.

## Claims

1. A friction clutch, comprising a cover plate (8) with a transversely oriented base portion (80) and fastening means for fastening it on a rotary driving flywheel, a pressure plate (3) having a front friction surface (30) for cooperation with a clutch friction wheel, means (9) for coupling the pressure plate (3) with the cover plate (8) for rotation together but with axial mobility, and, interposed between the pressure plate (3) and the base portion (80) of the cover plate (8), a diaphragm (2) having an outer peripheral portion (21) axially biasing the pressure plate (3) away from the base portion (80) of the cover plate (8) and extended inwardly by fingers (23) for counteracting the action of the said peripheral portion (21) at will through the actuating element or nose (11, 111) of a clutch release bearing (10), and a resilient assistance ring (7) acting on the fingers (23) of the diaphragm (2) in the declutching direction with engagement on the cover plate (8), characterised by the fact that the assistance ring (7) is disposed between the cover plate (8) and the actuating element or nose (11, 111) of the clutch release bearing (10), so that it is adapted to act on the fingers (23) of the diaphragm (2) through the said actuating element or nose (11, 111).

2. A clutch according to Claim 1, characterised by the fact that the elastic characteristics of the assistance ring (7) are so chosen that, when the clutch is engaged, the clutch friction wheel being new, the action exerted by the assistance ring (7) is very small or zero.

3. A clutch according to Claim 2, characterised by the fact that the elastic characteristics of the assistance ring (7) are so chosen that, when the clutch is engaged, the assistance ring (7) exerts a preloading force on the actuating element (11, 111) so as to maintain the latter in contact with the fingers (23) of the diaphragm (2).

4. A clutch according to Claim 3, characterised by the fact that the elastic characteristics of the assistance ring (7) are so chosen that, during the declutching operation, the action exerted by the assistance ring (7) increases and then decreases to a predetermined value which may be very low or zero, the clutch being disengaged.

5. A clutch according to Claim 2 or Claim 3, in which the fingers (23) of the diaphragm (2) are separated by radial slots which are open into holes (22) located at the inner periphery of the peripheral portion (21) of the diaphragm (2), the clutch being of the push-to-release type, characterised by the fact that the assistance ring (7) is situated generally radially inwardly of the zone defined by the holes (22) in the diaphragm (2).

6. A clutch according to Claim 5, characterised by the fact that the assistance ring (7) bears on the cover plate (8) on the face of the base portion (80) of the latter that faces towards the pressure plate (3).

7. A clutch according to Claim 6, characterised by the fact that the assistance ring (7) bears on a rounded edge (83) of the central aperture of the base portion (80) of the cover plate (8).

8. A clutch according to Claim 5, characterised by the fact that the assistance ring (7) bears on the cover plate (8) through the heads (61) of rivets which pass through the holes (22) in the diaphragm (2) and which extend the bodies of the said rivets outside the cover plate (8).

9. A clutch according to Claim 8, characterised by the fact that the assistance ring (7) is coupled to the cover plate (8) for rotation therewith.

10. A clutch according to Claim 9, characterised by the fact that the assistance ring (7) is secured to the cover plate (8), for rotation therewith, by a bayonet fitting.

11. A clutch according to Claim 9, characterised by the fact that the rotational coupling is obtained by means of pins (84) which are carried by the base portion (80) of the cover plate (8) and with which slots (83), formed at the outer periphery of the assistance ring (7), cooperate.

12. A clutch according to Claim 2, in which the clutch is of the pull-to-release type, characterised by the fact that the assistance ring (7) bears on the outer face of the base portion (80) of the cover plate (8), preferably through a thrust ring (86).

13. A clutch according to Claim 12, characterised by the fact that the base portion (80) of the cover plate (8) has external lugs (87) for axial retention of the assistance ring (7).

14. A clutch according to Claim 2, characterised by the fact that the assistance ring (7) is of cut-out form at its inner periphery, so as to define extensions (72) which cooperate with the actuating element or nose (11, 111).

15. A clutch according to Claim 2, characterised by the fact that it is equipped with a device (90) for compensating for wear in at least the liners of the clutch friction wheel (5).
